Europäisches Patentamt

European Patent Office

Office européen des brevets

(11) Publication number: **0 428 428 A2**

# EUROPEAN PATENT APPLICATION

(21) Application number: 90403071.5

(51) Int. Cl.5: **C12G 1/08**

(22) Date of filing: **30.10.90**

(30) Priority: **14.11.89 FR 8914928**

(43) Date of publication of application:
**22.05.91 Bulletin 91/21**

(84) Designated Contracting States:
**DE ES IT**

(71) Applicant: **MILLIPORE S.A.**
**Zone Industrielle**
**F-67120 Molsheim(FR)**

(72) Inventor: **Lemonnier, Jean**
**8, rue de la Fontaine**
**F-78110 Le Vesinet(FR)**

(74) Representative: **Rinuy, Santarelli**
**14, avenue de la Grande Armée**
**F-75017 Paris(FR)**

(54) **Insert for second fermentation of champagne or wines produced by the traditional method.**

(57) The invention concerns a hollow plastics material insert for the second fermentation of champagne or wine produced by the traditional method.

The insert (10) comprises a cylindrical skirt (11) forcibly inserted into the neck of the bottle and fastened to a central receptacle (17 or 21) for reinforcing it and comprising radial fins (18) joining the skirt and the receptacle.

An insert of this kind has a better sealing effect and avoids losses of wine and pressure during second fermentation and cellar storage on the lees.

FIG.4

EP 0 428 428 A2

# INSERT FOR SECOND FERMENTATION OF CHAMPAGNE OR WINES PRODUCED BY THE TRADITIONAL METHOD.

The object of the present invention is an insert for temporarily stoppering bottles of sparkling wine, champagne in particular, during the second fermentation.

The traditional method of producing champagne ("methode champenoise") consists in adding to wine whose first alcoholic fermentation has finished a bottling liquor ("liqueur de tirage") containing sugar and yeast for converting the sugar to carbon dioxide, after which the wine is bottled.

The bottles are then stoppered using a hollow plastics material insert in the neck of the bottle held in place by a crown cap.

They are then stored in a cellar at low temperature for a period between nine months and several years, during which they remain on their side on wooden laths or pallets ("sur lattes"), and they are then shaken individually in order to detach the yeast deposit from the walls of the bottle.

At the end of this long period of fermentation, during which the pressure inside the bottles rises, the bottles are placed on a special rack ("pupitre") in which they are regularly twisted and gradually inverted over one to two months to favour settling of the yeast deposit inside the hollow plastics material insert and in the neck of the bottle.

When this "remuage" is finished the bottles are transported upside down ("sur pointes"), that is to say with the neck downwards, and the neck is dipped into freezing brine maintained at approximately -25°C to freeze a pellet of wine containing the yeast residue.

The next process is "dégorgement" (disgorging), which entails turning upright the bottles whose necks have been frozen in this way and removing the crown cap. The pressure inside the bottle ejects the plastics material insert and the pellet containing the yeast sediment.

The level of wine in these bottles is then topped up by adding the "liqueur d'expedition" (shipping liquor) and the bottles reclosed with the final stopper which is usually a traditional cork.

A more modern variant of this traditional method involves adding to the first fermentation wine only a "liqueur de tirage" containing sugar and, after bottling, to plug the bottles by means of a tubular filter cartridge comprising an insert and a perforated tubular body containing the fermentation yeast, some perforations in which are covered by a hydrophilic filter membrane and the remainder of which are covered by a hydrophobic membrane, as described in European patent EP-B-0.210.915 filed 18 July 1986 by the Applicant.

Unfortunately, the plastics material inserts of the traditional method and the inserts of the tubular filter cartridges of the variant method that is the subject matter of said European patent are not perfectly sealed; some bottles fitted with these inserts leak during the long period of second fermentation ("prise de mousse") and cellar storage, as the pressure in the bottles rises, and even after this pressure rise. These so-called "leaky" bottles result in seepage of wine and loss of pressure which disrupts production and causes serious economic losses.

This seepage is difficult to prevent as it is essentially due to variations in the dimension of the neck of the champagne bottles, the diameter of which is normally 17.5 ± 0.3 mm; however, some bottles have a diameter outside this tolerance.

Seepage is also caused by lack of circularity of the bottle neck, which may be distorted and in particular assume a more or less oval or otherwise deformed shape. Finally, the high pressure of the second fermentation, which often exceeds six atmospheres and is maintained for at least nine months, favours micro-infiltration between the outside surface of the insert, the end of which is bevelled to facilitate its insertion, and the neck of the bottle, which increases the possibility of seepage of wine during the second fermentation.

An object of the present invention is to remedy these disadvantages by improving the seal between the insert and the neck of the bottle.

The hollow plastics material insert normally comprises a cylindrical skirt the outside diameter of which is slightly greater than the inside diameter of the bottle neck it is to stopper so that it must be compressed as it is forced into the bottle. In accordance with the invention it is provided with means for reinforcing such compression of the insert and ensuring a seal irrespective of variations in the diameter of the bottle neck.

These means comprise on the one hand a central receptacle adapted to receive the yeast sediment and which is fastened to the skirt at one end of said skirt or said receptacle and on the other hand radial fins linking said skirt and receptacle over at least part of their colon axial length.

By virtue of this structure the central receptacle stiffens the cylindrical skirt at the end where these two members are fastened together and the effect of the radial fins is to extend this stiffening over all the axial length of the fins, while offering some flexibility.

The central receptacle fastened to the skirt may be in the form of a tubular conduit concentric with and smaller in diameter than the skirt or frustoconical in shape with the open end fastened to and coaxial with the skirt.

The outside surface of the cylindrical skirt of the insert may have a bevelled end to facilitate the insertion of the insert into the bottle neck and a circular groove defining between them a sealing lip and the area where the skirt and the receptacle join is preferably axially aligned with the sealing lip.

The radial fins which serve to brace the skirt and preferably extend axially from the area where the skirt and the receptacle join may deform and to some degree act as a spring to mate the skirt to the inside geometry of the bottle neck.

The radial fins joining the skirt and the central receptacle in accordance with the invention preferably have a thickness not more than and if possible less than that of the skirt.

The Applicant has discovered that if the thickness of these fins is greater than that of the skirt then after moulding there is some shrinkage at each fin and this results in deformation of the outside surface of the skirt with the appearance of hollows or recesses. These cause seepage because the circumference of the skirt is no longer perfectly circular.

What is more, the number of these radial fins plays a non-negligible role in avoiding the cylindrical walls of the skirt becoming distorted during their forcible insertion into the bottle neck.

The Applicant has discovered that with four radial fins disposed on two perpendicular diameters of the cylindrical skirt the latter can deform and its cross-section cannot be guaranteed to remain circular, which favours seepage.

This is why it is preferable to use a number of radial fins linking the skirt and the receptacle in accordance with the invention that is greater than four, in particular between five and eight inclusive, and preferably six.

All the foregoing characteristics apply equally to the hollow plastics material insert used in the traditional method of producing champagne and to the insert part of the tubular filter cartridge described in the above-mentioned European patent and adapted like the conventional insert to match the neck of a champagne bottle.

The present invention will now be described with reference to the appended drawings in which the same components are indicated by the same reference numbers and in which:

- figure 1 shows a first embodiment in perspective;
- figure 2 shows a cross-section on the line AA in figure 1;
- figure 3 shows a second embodiment in perspective;
- figure 4 shows a cross-section on the line AA in figure 3;

- figure 5 shows a third embodiment in perspective;
- figure 6 shows a cross-section on the line AA in figure 5;
- figure 7 shows in cross-section on the line BB in figure 8 a fourth embodiment which is the preferred embodiment of the invention;
- and figure 8 shows a top view of the embodiment from figure 7.

The appended drawings show the various embodiments of the hollow plastics material insert 10.

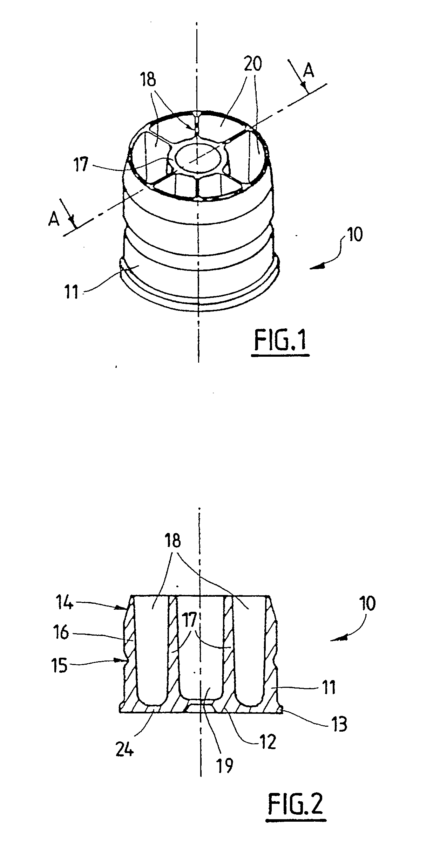

The insert comprises a cylindrical skirt 11 which in the embodiment shown in figures 1 and 2 is fastened at one end to a circular bottom 12 and an external rim 13 designed to bear on the entrance to the neck of the bottle to be stoppered.

The end of the skirt opposite the cover incorporates a bevel 14 to facilitate the forcible insertion of the insert into the neck.

The outside surface of the skirt incorporates a circular groove 15.

The part of the skirt between the bevel 14 and the groove 15 forms a sealing lip 16.

In a first embodiment of the present invention the sealing effect of this lip is improved by a tubular conduit 17 and six radial fins 18 joining the conduit to the skirt 11.

The tubular conduit 17 is fastened to the skirt 11 through a joining area 24 and is concentric with and of smaller diameter than the skirt 11. Its axial length is the same as that of the skirt.

Six radial fins 18 disposed symmetrically relative to the axis of the insert 10, as shown in figure 1, join the outside skirt 11 to the inside conduit 17 over all of their colon axial length, that is to say from the bottom 12 to the open and bevelled end of the insert.

It should be noted that an insert of this kind therefore comprises a central housing 19 and six lateral compartments 20 defined by the fins 18 and which can all receive yeast sediment during the second fermentation of the wine.

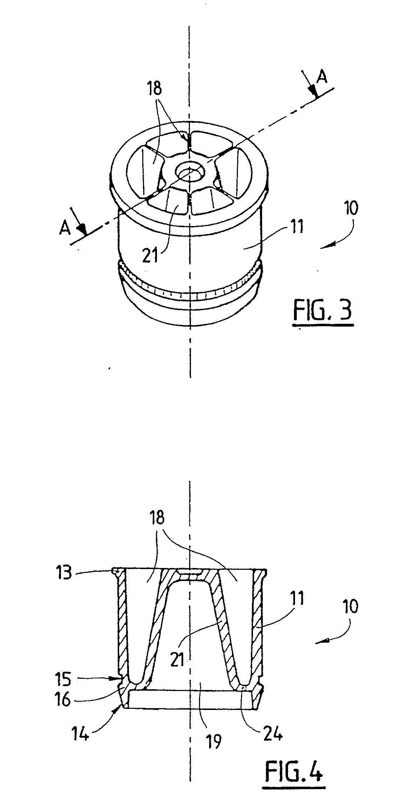

A second embodiment of insert in accordance with the present invention, shown in figures 3 and 4, differs from that shown in figures 1 and 2 by virtue of the fact that the bottom 12 and the tubular conduit 17 are replaced with a frustoconical member 21 which is fastened to the skirt 11 not at the end comprising the outside rim 13 but at the opposite end 14 of the skirt.

In this way the sealing lip 16 situated between the bevelled end 14 of the skirt and the circular groove 15 is in direct axial alignment with the joining area 24 between the skirt 11 and the open base of the frustoconical member 21.

There are six radial fins 18 arranged as previously described and extending from the area in which the skirt 11 and the frustoconical member 21 join to the colon other end of the skirt and the frustoconical member corresponding to the rim 13.

In this embodiment the transverse cross-section of the insert is W-shaped, as shown in figure 4. The open larger end and the closed smaller end of the frustoconical member enable the latter to serve as a housing 19 for receiving yeast sediment during the second fermentation of the wine.

Given that the volume of the housing 19 of the second embodiment is less than that of the housing 19 plus the compartments 20 in the first embodiment, for identical insert dimensions, provision may be made for increasing the yeast residue receiving capacity by joining the skirt 11 and the frustoconical member 21 at a distance from the bevelled end 14 of the skirt.

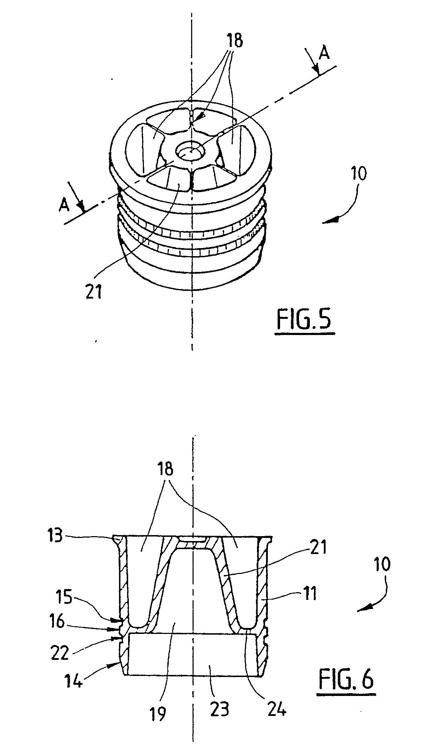

Figures 5 and 6 show a third embodiment of insert in accordance with the invention differing from that of figures 3 and 4 essentially by virtue of the fact that the axial height of the frustoconical member 21 is less than that of the skirt 11.

It is then preferable to provide on the outside surface of the skirt 11 a second circular groove 22 located in the axial direction between the bevelled end 14 of the skirt 11 and the area in which the skirt and the frustoconical member join.

In this way the sealing lip 16, which corresponds to the area 24 in which the skirt and the frustoconical member join, is defined by the circular grooves 15 and 22 situated to either side of this merging area.

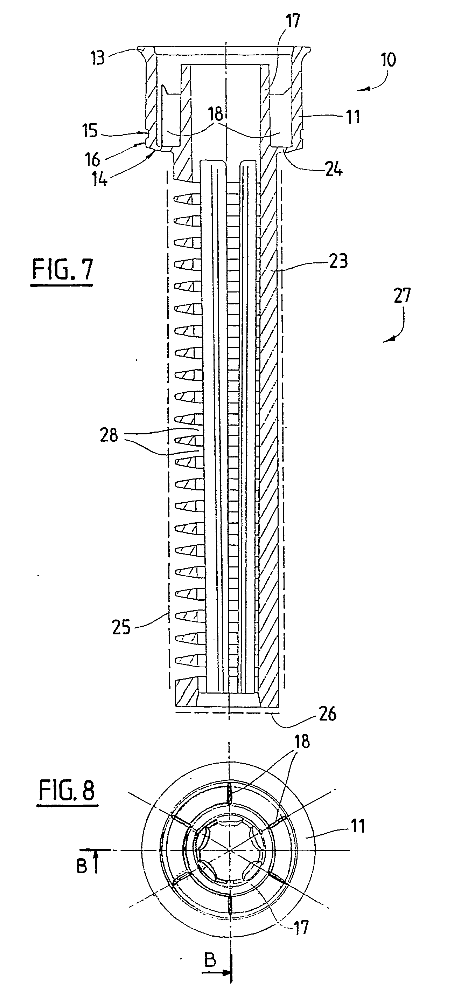

In this third embodiment the volume available for receiving yeast residue comprises in addition to the frustoconical housing 19 its cylindrical extension 23 (see figure 6). A fourth and preferred embodiment of the invention is shown in figures 7 and 8. In this embodiment the insert 10 in accordance with the invention comprises a cylindrical skirt 11 fastened to a concentric tubular conduit 17 which is extended by a perforated tubular body 23, some of the perforations 28 in which are covered by a hydrophilic filter membrane 25 and the remainder of which are covered by a hydrophobic filter membrane 26, so as to form a tubular filter cartridge 27 designed to act as a storage area for the yeast for the second fermentation which turns the wine into sparkling wine, as described in the Applicant's European patent 210.915. The open end of the conduit 17 may be closed by a cover (not shown) after adding the yeast.

The bevelled end 14 of the skirt 11 opposite that fastened to the outside rim 13 is fastened to the tubular conduit 17 by a merging area 24 corresponding to a sealing lip 16.

As figure 8 clearly shows, six radial fins 18 disposed symmetrically to the axis of the insert, as in the embodiments from the previous figures, joins the skirt 13 and the conduit 17.

The fins 18 start from the area in which the skirt and the conduit 17 join but extend over part only of the colon axial length of the skirt and the conduit (see figure 7).

By virtue of their bracing action against the conduit 17, the fins 18 improve the sealing effect of the lip 16 which constitutes the least deformable part of the insert because of the presence of the joining area with the conduit 17 and the fins 18 extend this sealing effect in the direction towards the axis of the insert by de forming to adapt to the geometrical configuration of the bottle neck.

As figure 7 shows, the angle between the bevelled end 14 of the skirt 11 and the perpendicular to the axis of the insert is, differing in this respect from the embodiment shown in figures 1 through 6, less than 45° and preferably between 10° and 20°.

It is no longer necessary to guide the insertion of the insert into the neck of the bottle by means of the bevel, this role being played by the perforated tubular body 23. This avoids micro-infiltration, which results in seepage, between the skirt and the neck of the bottle.

## Claims

1. Hollow plastics material insert (10) for wine bottles comprising a cylindrical skirt (11) the outside diameter of which matches the inside diameter of the neck of the bottle to be stoppered, characterised in that it comprises a central receptacle (17 or 21) adapted to receive fermentation yeast sediment and fastened to the skirt at one end of said skirt (11) or said receptacle (17 or 21) and radial fins (18) joining said skirt and receptacle over at least part of their colon axial length.

2. Insert according to claim 1 characterised in that the central receptacle fastened to the skirt is in the form of a tubular conduit (17) concentric with and of smaller diameter than the skirt (11).

3. Insert according to claim 1 characterised in that the central receptacle fastened to the skirt is in the form of a frustoconical member (21) the open end of which is fastened to and coaxial with the skirt (11).

4. Insert according to any one of claims 1 through 3 characterised in that the outside surface of the cylindrical skirt comprises a bevelled end (14) and a circular groove (15) defining a sealing lip (16) preferably aligned with the area (24) in which the skirt and the central receptacle join.

5. Insert according to any one of claims 1 through 3 characterised in that the radial fins (18) joining the skirt and the receptacle (17 or 21) extend from the area (24) where the latter two members join over at least part and preferably all of their common axial length.

6. Hollow insert according to any one of the preceding claims characterised in that the radial fins (18) joining the skirt (11) and the receptacle (17 or 21) have a thickness equal to or less than that of the skirt.

7. Hollow insert according to any one of the preceding claims characterised in that the number of radial fins (18) joining the skirt (11) and the receptacle (17 or 21) is greater than four, in particular between five and eight inclusive, and preferably equal to six.

8. Insert according to claims 1 and 2 characterised in that the concentric tubular conduit (17) fastened to the skirt (11) is extended by a perforated tubular body (23) some of the perforations (28) in which are covered by a hydrophilic filter membrane (25) and the remainder of which are covered by hydrophobic filter membrane (26) in such a way as to form a tubular filter cartridge (27).

9. Insert according to claims 4 and 8 characterised in that the angle between the bevelled end (14) of the skirt (11) and the perpendicular to the axis of the insert is less than 450 and preferably between 10° and 20°.

10. Application of the insert according to any one of claims 1 through 9 to second fermentation of sugared wine in bottles by the traditional champagne method.

FIG.1

FIG.2

18

A

A

21

11

10

FIG. 3

18

13

11

10

21

15

16

14

19

24

FIG.4

FIG.5

FIG.6

EP 0 428 428 A2

FIG. 7

13
17
10
15
18
11
16
14
24
23
27
28
25
26

FIG. 8

18
11
17
B
B

9